# NEUE EUROPÄISCHE PATENTSCHRIFT

(11) **EP 0 795 225 B2**
(45) Veröffentlichungstag und Bekanntmachung des Hinweises auf die Entscheidung über den Einspruch: **12.03.2003**
(45) Hinweis auf die Patenterteilung: 29.07.1998
(21) Anmeldenummer: 95937713.6
(22) Anmeldetag: 28.11.1995
(51) Int. Cl.: H02K 3/40, H02K 15/12

(54) **VERFAHREN ZUM HERSTELLEN EINES MIT POTENTIALSTEUERUNGEN VERSEHENEN WICKLUNGSSTABES VON HOCHSPANNUNGSWICKLUNGEN FÜR EINE ROTIERENDE ELEKTRISCHE MASCHINE**
METHOD OF MANUFACTURING A BAR FITTED WITH A POTENTIAL-CONTROL DEVICES FOR BAR-WOUND HIGH-VOLTAGE WINDINGS FOR A ROTATING ELECTRIC MACHINE
PROCEDE DE PRODUCTION D'UNE BARRE POUR ENROULEMENTS HAUTE TENSION POUR MOTEUR ELECTRIQUE ROTATIF, MUNIE DE DISPOSITIFS ANTI-EFFLUVES

(30) Priorität: 01.12.1994 AT 222794
(43) Veröffentlichungstag der Anmeldung: 17.09.1997
(73) Patentinhaber: VA TECH HYDRO GmbH, 1141 Wien (AT)
(72) Erfinder: MÜLLER, Franz, A-8071 Grambach (AT); MUSSBACHER, Günther, A-8062 Kumberg (AT)
(74) Vertreter: VA TECH Patente GmbH & Co
(86) Internationale Anmeldenummer: AT9500230
(87) Internationale Veröffentlichungsnummer: WO96017428

(56) Entgegenhaltungen:
- EP-A- 0 059 402
- EP-A- 0 573 796
- EP-A- 0 602 907
- EP-B- 0 059 402
- CH-B- 547 028
- DE-A- 1 463 913
- DE-A- 4 218 928
- DE-A- 4 219 064
- DE-B- 1 113 017
- DE-B- 1 236 062
- DE-B- 1 250 540
- DE-B- 1 438 304
- DE-B- 1 488 663
- DE-C- 1 613 441
- DE-C- 3 138 766
- PATENT ABSTRACTS OF JAPAN Bd. 017, Nr. 289 (E-1375) 03 Juni 1993 & JP,A,05 015 095 (FUJI ELECTRIC CO LTD) 22 Januar 1993
- PATENT ABSTRACTS OF JAPAN Bd. 011, Nr. 055 (E-481) 20 Februar 1987 & JP,A,61 214 750 (FUJI ELECTRIC CO LTD) 24 September 1986
- Katalogauszug der Schweizerischen Isolawerke AG, Breitenbach, Schweiz, Juli 1990
- "Herstellung der Wicklunger elektrischer Maschinen", Hrsg. H. Sequenz, Springer-Verlag Wien + New York, 1973
- Prospekt der Oesterreichischen Isolierstoffwerke AG, 2355 Wiener Neudorf, Oesterreich, 27.03.1990
- ETG Fachbericht, Nr. 53, Konferenzbericht der ETG-Fachtagung vom 13.09.-14.09.94 in Wuerzburg, DE, VDE-Verlag 1994, S. 101-114
- "State of development of insulation technology for high-voltage rotating electrical machines", ISOTEC WORKSHOP 93, 23./24.11.1993, Zuerich
- "Insulation System for Synchronous Machines", Internat. Conference SM 100, Zuerich 1991, proceeding, part 1, S. 182 bis 188
- "Micadur: Isoliersystem fuer Statorwicklungen von rotierenden elektrischen Maschinen", ABB Drives AG, Schweiz 1992
- Fertigungsanweisung FA 412 "Glimmschutzmaßnahmen mit Leit-Band und Leit-Lack" einschließlich Normblaetter HZN35-7-640.0, HZN 165-04-302, HZN 165-04-303, HZN 165-04-304, HZN 165-04-305, HZN 165-04-301.01, Fertigunsanweisung HTZW 23222

## Beschreibung

Die Erfindung betrifft ein Verfahren zum Herstellen eines mit Potentialsteuerungen versehenen Wicklungsstabes von Hochspannungwicklungen für eine rotierende elektrische Maschine, wobei der mit einer Hauptisolation umgebene Wicklungsstab mit einer leitenden Schicht versehen wird.

Stand der Technik bei der Fertigung von Stäben oder Spulen für eine Hochspannungswicklung nach dem Einzeltränkverfahren - zum Unterschied zur Ganztränktechnologie, bei der Wicklung und Statorpaket gemeinsam imprägniert werden - ist, daß die aus dielektrischen Gründen erforderlichen Potentialsteuerungen in Form von leitenden Anstrichen oder leitenden Beschichtungen auf die imprägnierte und bereits ausgehärtete Wicklungsoberfläche aufgebracht werden.

Aus der DE-OS 42 19 064 ist eine Glimmschutzanordnung für die Statorwicklung einer elektrischen Maschine bekannt, die für Ganzformspulen oder Röbelstäbe Verwendung findet. Dieser Nutglimmschutz weist zwei Schichten auf, wobei ein erster für Imprägnierharz durchlässiger und vom Imprägnierharz benetzbarer Glimmschutzbelag direkt auf der Hauptisolation liegt und die zweite Schicht ein textiler, mit einem das Imprägnierharz abweisenden Mittel versehener Glimmschutzbelag der direkt an der Nutwand anliegt, ist. Für diese nach der Ganztränktechnik hergestellten Maschinen, die vorzugsweise bei Turbogeneratoren und Motoren Anwendung findet, ist dieser Aufwand erforderlich da durch die Erwärmung der Wicklung unvermeidbare thermomechanische Beanspruchungen beherrscht werden müssen.

Darüber hinaus ist aus der DE-OS 42 18 928 eine weitere Glimmschutzanordnung für die Statorwicklung einer elektrischen Maschine bekannt, wobei die Potentialsteuerung durch ein halbleitendes textiles Glimmschutzband mit einem durch den über den Überlappungsgrad eingestellten Leitwert erzielt wird. Auch dieser Wicklungsstab wird trocken in die Nut der Maschine eingelegt und durch Nutkeile fixiert. Entsprechend der Ganztränktechnik wird der Stator als Ganzes mit Tränkharz überflutet und unter Anwendung von Wärme wird das Harz ausgehärtet. Da bei dieser Herstelltechnik der Wicklungsstab unimprägniert in das Blechpaket eingepreßt wird, und keine Maßnahmen für eine elastische Trennschicht vorgesehen sind, kann es im Betrieb der Maschine durch die thermomechanischen Beanspruchungen zu Schäden kommen.

Ein weiterer gravierender Nachteil der Ganztränktechnik ist aber darin zu sehen, daß ein Ausbau eines einzelnen Wicklungsstabes nach dem Aushärten des kompletten Stators kaum ohne Zerstörung mehr möglich ist. Ein eventueller Reparaturaufwand wird dadurch immens erhöht. Weiters läßt sich diese Methode auf Grund der erforderlichen Fertigungseinrichtungen nur bis zu einem gewissen Außendurchmesser der Generatoren sinnvoll anwenden.

Aufgabe der Erfindung ist es, ein Verfahren der eingangs zitierten Art zu schaffen, das es bei der Einzelstab-Tränkung bzw. Formtränkung ermöglicht, die Auβenpotentialsteuerung vor dem Imprägnieren mit dielektrisch hochwertigen Harzen auf den einzelnen Stab aufzubringen.

Das erfindungsgemäße Verfahren ist durch die Merkmale des Hauptanspruchs gekennzeichnet.

Mit der Erfindung ist es erstmals möglich, die Potential steuerung mit der Hauptisolierung mitzuimprägnieren und dadurch in diese zu integrieren, sodaß sie Bestandteil dieser wird. Damit wird eine außerordentliche hohe Abriebfestigkeit bei gleichzeitiger guter elektrischer Leitfähigkeit erreicht. Ferner ist es möglich, den einzelnen Wicklungsstab vor seinem Einbau genauestens zu prüfen und auch die Meßwerte der Potential steuerung zu erfassen.

Nach einer besonderen Ausgestaltung der Erfindung wird als Band eine das Imprägnierharz durchdringende Vlies- oder Gewebestruktur verwendet. Durch die Gewebe- oder Vliesstruktur des leitfähigen Bandes wird erreicht, daß es vom Tränkharz leicht durchdrängt wird und nach dem Aushärtungsvorgang mit der Hauptisolierung eine homogene Einheit bildet. Die Potentialsteuerung wird durch dieses Verfahren in die Deckschicht der Hauptisolierung integriert.

Gemäß einem weiteren Merkmal der Erfindung wird eine Verbundfolie mit hoher und temperaturabhängiger Schrumpffähigkeit und hoher Trennwirkung als Trennfolie verwendet. Vor dem Einbau der Wicklungsstäbe in die Tränkform müssen die Stäbe noch mit einer speziellen Trennfolie umgeben werden, der zwei wesentliche Funktionen zukommen. Die Trennfolie muß eine gute Trennwirkung sowohl zum Wicklungsstab als auch zur Tränkform aufweisen, so daß der Wicklungsstab nach dem Imprägnier- und Härtungsprozeß aus der Tränkform leicht ausbaubar ist und abgesehen vom Entfernen der Trennfolie es keiner Nacharbeit oder Nachbehandlung der Staboberläche bedarf. In der zweiten Funktion muß die Trennfolie ein temperaturabhängiges Schrumpfverhalten mit einem ausgeprägten Knickpunkt aufweisen. Beim Tränkprozeß soll das Eindringen von Imprägnierharz ermöglicht werden und beim anschlieβenden Härtungsprozeß so stark schrumpfen bzw. sich so kompakt an die leitfähigen Decklagen im Nut- und Übergangsbereich anlegen, daß keine isolierende Harzschicht (-film) oder Harznester sich auf der Staboberfläche ausbilden können.

Nach einer weiteren Ausgestaltung der Erfindung wird eine Trennfolie mit Durchbrüchen verwendet wird. Um das Eindringen des Harzes beim Imprägnierprozeß zu erleichtern, kann die Trennfolie außerdem noch durchbrochen sein. Darüber hinaus weist der Wicklungsstab aufgrund der Tränkung und Aushärtung in der kalibrierten Tränkform ganz genau definierte Abmessungen auf.

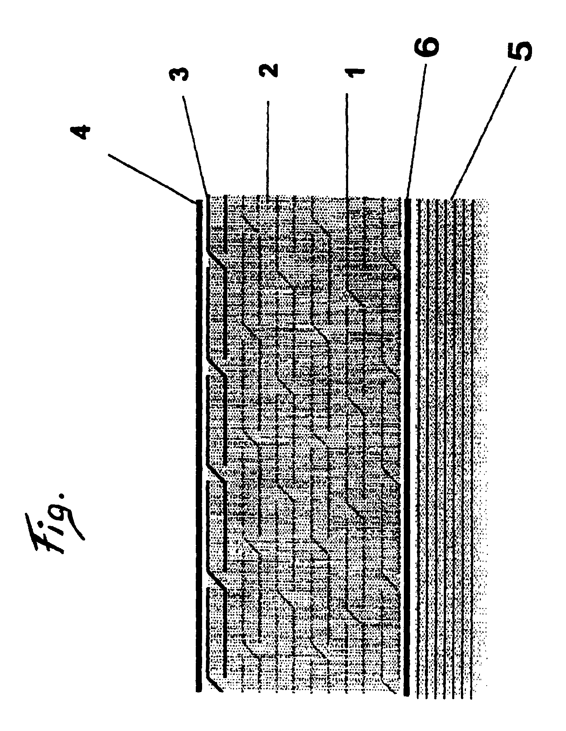

Die Erfindung wird anhand eines in der Zeichnung dargestellten Ausführungsbeispieles näher erläutert. Die Fig. zeigt den prinzipiellen Aufbau. Gemäß der Fig. ist der Wicklungsstab 5 mit einer Innenpotentialsteuerung 6 versehen. Derartige Innenpotentialsteuerungen 6 zählen zum Stand der Technik.

Der Wicklungsstab 5 mit der Innenpotentialsteuerung 6 ist von der Hauptisolation 1 umgeben. Die als Hauptisolation 1 verwendeten Isolierbänder sind vorwiegend Glimmer aufweisende Trägerbänder. Das einen definierten niederohmigen Widerstandswert aufweisende Band 3 für die Außenpotentialsteuerung wird über die Hauptisolation 1 gewickelt. Äquivalent wird mit dem einen spannungsabhängigen Widerstandswert aufweisenden Band für die Wickelkopfausladung verfahren, das sich an das niederohmige Band 3 im Nutbereich kontinuierlich anschließt.

Vor dem Einbau des Wicklungsstabes 5 in die kalibrierte Tränkform wird dieser, in dem in der Nut vorgesehenen Teil mit einer Trennfolie 4 umgeben.

Entsprechend dem Einzeltränkverfahren wird nunmehr der Wicklungsstab 5 im dielektrisch hochwertigen Harz getränkt. Das Tränkharz 2 benetzt sowohl die mit Glimmer versehenen Trägerbänder der Hauptisolation 1 als auch das Band 3 für die Außenpotentialsteuerung. Zur Vermeidung eines Harzfilmes an der Staboberfläche wird während des Imprägniervorganges eine spezielle Trennfolie 4 vorgesehen.

Mit der Erfindung ist es bei der Einzelstab-Tränktechnologie erstmals möglich, die einzelnen Wicklungsstäbe so zu fertigen daß nach dem Tränkprozeß keine weitere Bearbeitung oder Behandlung erforderlich ist, bzw. die Stäbe nach einer Qualitätskontrolle zum Einbau im Stator zur Verfügung stehen.

Der wesentlichste Vorteil dieses Verfahrens ist durch die Integration der Potentiatsteuerschichte (Außen- und Endenglimmschutz) in die Außenoberfläche der Hauptisolierung gegeben, nämlich einerseits die Qualitätssteigerung - hohe phvsikalisch abriebfeste, leitende Oberflächenstruktur mit sehr geringen Schwankungen im Leitwert - in der Potentialsteuerung und andererseits eine merkliche Senkung der Fertigungskosten.

Derartige Bänder 3 für die Außenpotentialsteuerung sind im Handel erhältlich, und werden auch von der Industrie für die verschiedensten Anwendungen verwendet. Wichtig dabei ist, daß diese Bänder während des Tränkens keine leitfähigen Pigmente ausscheiden, bzw. daß bei der Durchtränkung keine leitfähigen Pigmente in die Hauptisolierung 1 eintreten.

Die einen spannungsabhängigen Widerstandswert aufweisenden Bänder sind derart aufgebaut, daß Siliziumkarbidpartikelchen im Band integriert sind, wodurch sich der Gesamtwiderstand des Bandes entsprechend der auftretenden Spannung bei der Wickelkopfausladung verändert. Es wird somit auch in diesem Bereich eine annähernd lineare Spannungsverteilung erreicht.

Auch die von der Trennfolie verlangten Eigenschaften, nämlich die Schrumpffähigkeit bzw. die Trennwirkung widersprechen normalerweise einander. Diese Eigenschaften werden mit einer Verbundfolie erreicht, die einen ausgeprägten Knickpunkt aufweist. D. h., das ab einer bestimmten Temperatur der Schrumpfprozess erst stattfindet.

## Patentansprüche

1. Verfahren zum Herstellen eines mit Potentialsteuerungen (6) versehenen Wicklungsstabes (5) von Hochspannungswicklungen für eine rotierende elektrische Maschine, wobei der mit einer Hauptisolation (1) umgebene Wicklungsstab (5) an dem in der Nut vorgesehenen Teil dieses Wicklungsstabes (5) mit einem einen definierten niederohmigen Widerstandswert aufweisenden Band (3) versehen wird und die Wickelkopfausladung mit einem einen spannungsabhängigen Widerstandswert aufweisenden Band versehen wird, und dieser Wicklungsstab (5) zur Tränkung und anschließenden Aushärtung in eine kalibrierte Tränkform eingebracht wird, wobei der in der Nut vorgesehene Teil des Wicklungsstabes (5) mit einer Trennfolie (4) umgeben wird, welche beim Tränkprozess so stark schrumpft, daß sich an der Staboberfläche keine isolierende Harzschicht ausbilden kann.

2. Verfahren nach Anspruch 1, **dadurch gekennzeichnet, daß** als Trennfolie eine Verbundfolie mit hoher und temperaturabhängiger Schrumpffähigkeit und hoher Trennwirkung verwendet wird.

3. Verfahren nach Anspruch 2, **dadurch gekennzeichnet, daß** die Schrumpffähigkeit der Trennfolie bei einer bestimmten Temperatur, ab welcher der Schrumpfprozess einsetzt, einen ausgeprägten Knickpunkt aufweist.

4. Verfahren nach Anspruch 1, **dadurch gekennzeichnet, daß** eine Trennfolie mit Durchbrüchen verwendet wird.

## Claims

1. Method of manufacturing a bar (5) fitted with potential-control devices (6) for bar-wound high-voltage windings for a rotating electric machine, the bar (5) surrounded by a main insulation (1) being fitted, in that part of the bar (5) which is provided with a groove, with a band (3) having a defined low resistance value, and the winding overhang being fitted with a belt having a voltage-dependent resistance value, and this bar (5) being introduced into a calibrated impregnating mould for impregnation and subsequent hardening, that part of the bar (5) which is provided in the groove being surrounded by a release foil (4) which shrinks during the impregnation process to such an extent that no insulating resin layer can form on the rod surface.

2. Method according to Claim 1, **characterized in that** the release foil used is a laminated foil having high and temperature-dependent shrinkability and a good release effect.

3. Method according to Claim 2, **characterized in that** the shrinkability of the release foil has a pronounced salient point at a specific temperature from which the shrinkage process starts.

4. Method according to Claim 1, **characterized in that** a release foil having passages is used.

## Revendications

1. Procédé de fabrication d'une barre d'enroulement (5) munie de dispositifs anti-effluves (6), pour des enroulements haute tension destinés à une machine électrique rotative, la barre d'enroulement (5) entourée d'une isolation principale (1) étant pourvue, sur la partie de cette barre d'enroulement (5) prévue dans l'encoche, d'une bande (3) présentant une valeur de résistance définie de faible valeur ohmique, et la saillie de tête d'enroulement est pourvue d'une bande présentant une valeur de résistance fonction de la tension, et cette barre d'enroulement (5) est placée dans un moule d'imprégnation calibré pour l'imprégnation et le durcissement qui suit, la partie de la barre d'enroulement (5) prévue dans l'encoche étant pourvue d'une feuille de séparation (4) qui, lors du processus de séparation, se rétracte si fortement qu'aucune couche de résine isolante ne peut se former sur la surface de la barre.

2. Procédé selon la revendication 1, **caractérisé en ce que**, en guise de feuille de séparation, on utilise une feuille composite ayant une capacité de rétraction élevée et fonction de la température, ainsi qu'un effet séparateur élevé.

3. Procédé selon la revendication 2, **caractérisé en ce que** la capacité de rétraction de la feuille de séparation, à une température déterminée, à partir de laquelle le processus de rétraction se met en oeuvre, présente un point d'inflexion accentué.

4. Procédé selon la revendication 1, **caractérisé en ce qu'**on utilise une feuille de séparation comportant des ouvertures de passage.
